# EUROPEAN PATENT APPLICATION

(11) **EP 2 562 597 A1**
(43) Date of publication of application: **27.02.2013**
(21) Application number: 12162163.5
(22) Date of filing: 29.03.2012
(51) Int. Cl.: G03B 21/28, G02B 7/182, G02B 7/18

(54) **Projector with reflector**

(30) Priority: 26.08.2011 KR 20110086044
(71) Applicant: Samsung Electronics Co., Ltd., Suwon-si, Gyeonggi-do, 443-742 (KR)
(72) Inventor: Park, Jae-hyun, Seoul (KR); Nho, Jeong-ho, Gyeonggi-do (KR); Hur, Jean, Gyeonggi-do (KR)
(74) Representative: Misselbrook, Paul

(57) **Abstract**

A projector is provided. The projector includes a projection unit which projects an image, a case which supports the projection unit, a reflecting mirror which includes a reflecting surface which faces the projection unit and has a curvature, and reflects light, a first fixing part which is disposed on a center axis of the reflecting mirror on an outer area of the reflecting surface, and a second fixing part and a third fixing part which are disposed on the outer area of the reflecting surface and which form a triangle with the first fixing part. Each of the first, second, and third fixing parts is configured to fix the reflecting mirror to the case.

## Description

### CROSS-REFERENCE TO RELATED APPLICATION

This application claims priority from Korean Patent Application No. 10-2011-0086044, filed on August 26, 2011, in the Korean Intellectual Property Office, the disclosure of which is incorporated herein by reference in its entirety.

### BACKGROUND

### 1. Field

Methods and apparatuses consistent with exemplary embodiments relate to a projector, and more particularly, to a projector which can prevent thermal deformation of a reflecting mirror disposed in the projector, which is caused by an increase in internal temperature of the projector.

### 2. Description of the Related Art

A projector or a projection system is a display apparatus that projects an incoming video signal onto a screen using light emitted from a light source, such as, for example, a light emitting diode (LED) or a lamp, thereby displaying an image. Such a display apparatus may be used to give a presentation in a conference room or to realize a projector in a theater or a home theater at home. A related art projector projects an image at a distance from a screen in order to guarantee a projecting distance. In the case of this projector, if a person passes by within the projecting distance, a part of the image projected onto the screen is hidden, and also, it is difficult to display a big screen in a small room.

Accordingly, a super-close projection projector has been actively developed in recent years. In order to achieve close projection, the super-close projection projector uses a reflecting mirror to adjust a magnification of a screen and a position of an image prior to projecting the image onto the screen.

The reflecting mirror is generally made of a plastic material, and thus, thermal deformation may occur if an internal temperature of the projector increases. Therefore, a curvature and an angle of the reflecting mirror are changed due to the thermal deformation, and thus, there are problems in that the image projected on the screen is distorted and image quality deteriorates.

Accordingly, there is a demand for a method for preventing thermal deformation of a reflecting mirror disposed in a projector, which is caused by an increase in internal temperature of the projector.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a projector which comprises a fixing part formed on a predetermined position of a reflecting mirror and connected to a case to prevent thermal deformation of the reflecting mirror, which is caused by an increase in internal temperature of the projector.

According to an aspect of an exemplary embodiment, there is provided a projector comprising: a projection unit which projects an image, a case which supports the projection unit, a reflecting mirror which includes a reflecting surface that faces the projection unit and has a curvature, and reflects light, a first fixing part which is disposed on a center axis of the reflecting mirror on an outer area of the reflecting surface, and a second fixing part and a third fixing part, each of which is disposed on the outer area of the reflecting surface, and which form a triangle with the first fixing part. Each of the first, second, and third fixing parts is configured to fix the reflecting mirror to the case.

The reflecting mirror may be an aspheric mirror having a concave refracting surface, and the reflecting surface may be formed on the refracting surface.

The first fixing part may be disposed on an upper center portion of the outer area of the reflecting surface of the reflecting mirror. The second fixing part may be disposed on a lower left portion of the outer area of the reflecting surface. The third fixing part may be disposed on a lower right portion of the outer area of the reflecting surface.

Each of the second and the third fixing parts may be disposed at a respective point of an edge of the reflecting mirror where the curvature is changed.

The case may comprise: a first protrusion which is connected to the second fixing part, and a second protrusion which is connected to the third fixing part.

The case may further comprise: a first elastic member which is disposed between the first protrusion and the second fixing part, and a second elastic member which is disposed between the second protrusion and the third fixing part, and a connection angle of the reflecting mirror may be adjusted according to a connection state between the second fixing part and the first protrusion and a connection state between the third fixing part and the second protrusion.

The first fixing part may be disposed on a lower center portion of the outer area of the reflecting surface of the reflecting mirror. The second fixing part may be disposed on an upper left portion of the outer area of the reflecting surface. The third fixing part may be disposed on an upper right portion of the outer area of the reflecting surface, such that the second and third fixing parts form an inverted triangle with the first fixing part.

The second fixing part may be disposed on a corner of the upper left portion of the outer area of the reflecting surface, and the third fixing part may be disposed on a corner of the upper right portion of the outer area of the reflecting surface.

The case may comprise: a first protrusion which is connected to the first fixing part, a second protrusion which is connected to the second fixing part, and a third protrusion which is connected to the third fixing part.

The case may further comprise: a first elastic member which is disposed between the first protrusion and the first fixing part, a second elastic member which is disposed between the second protrusion and the second fixing part, and a third elastic member which is disposed between the third protrusion and the third fixing part, and a connection angle of the reflecting mirror may be adjusted according to a connection state between the first fixing part and the first protrusion, a connection state between the second fixing part and the second protrusion, and a connection state between the third fixing part and the third protrusion.

Each of the first, second, and third fixing parts may comprise a respective hole formed on the outer area of the reflecting surface and a respective connection member penetrating through the corresponding hole and connected to the case.

A bottom surface of the reflecting mirror may be positioned at a predetermined distance away from the case.

The projector may further comprise: a supporting part which supports the reflecting mirror and which is disposed in a space between the bottom surface of the reflecting mirror and the case, and a buffering part which is disposed on the supporting part in contact with the reflecting mirror.

According to the above exemplary embodiments, the fixing parts are formed in predetermined positions of the reflecting mirror to be fixed to the case. Accordingly, thermal deformation of the reflecting mirror caused by an increase in internal temperature of the projector can be substantially prevented, and thus, an area which is contacted by beams projected by the projector can be substantially prevented from bending or being inclined.

Additional aspects and advantages of the exemplary embodiments will be set forth in the detailed description, will be obvious from the detailed description, or may be learned by practicing the exemplary embodiments.

### BRIEF DESCRIPTION OF THE DRAWING FIGURES

The above and/or other aspects will be more apparent by describing in detail exemplary embodiments, with reference to the accompanying drawings, in which:
FIG. 1 is a schematic view illustrating a projector according to an exemplary embodiment;
FIGS. 2A and 2B are views which illustrate a method for fixing a reflecting mirror to a case according to an exemplary embodiment;
FIGS. 3A and 3B are views which illustrate a method for fixing a reflecting mirror to a case according to another exemplary embodiment;
FIG. 4 is a cross sectional view illustrating a reflecting mirror and a case according to an exemplary embodiment;
FIG. 5 is a view illustrating a fixing part according to an exemplary embodiment; and
FIGS. 6A, 6B, 6C, 6D, 6E, and 6F are views which illustrate thermal deformation modes according to various fixing positions at which a reflecting mirror is fixed.

### DETAILED DESCRIPTION OF THE EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

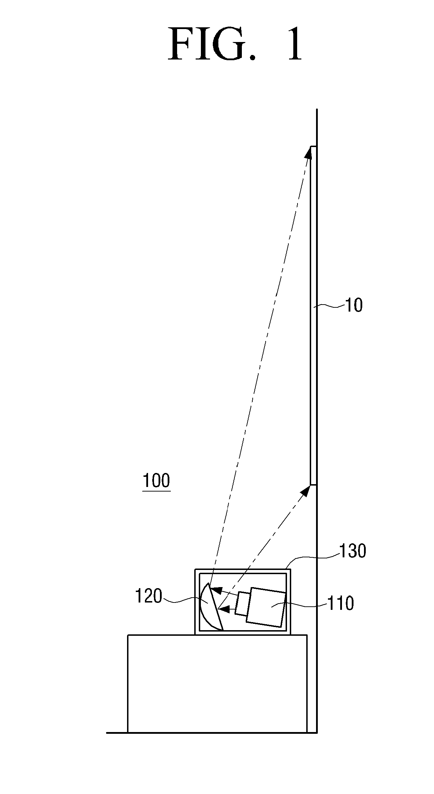

FIG. 1 is a schematic view illustrating a projector according to an exemplary embodiment. Referring to FIG. 1, a projector 100 comprises a projection unit 110, a reflecting mirror 120, and a case 130, and may be a super-close projection projector that is disposed in front of a screen 10 to be able to project an image in relative proximity to the screen 10.

The projection unit 110 projects an image. More specifically, the projection unit 110 may project an image transmitted from an external source or pre-stored in a storage unit (not shown) onto the screen 10 using a light source, such as, for example, a lamp or a light emitting diode (LED).

In this exemplary embodiment, the projection unit 110 projects light onto the reflecting mirror 120, which faces the projection unit 110 according to the image, and the reflecting mirror 120 reflects the light, thereby displaying the image on the screen 10.

The reflecting mirror 120 has a reflecting surface having a curvature and functions to reflect the image. The reflecting surface is disposed facing the projection unit 110. More specifically, the reflecting mirror 120 may be an aspheric mirror having a concave refracting surface, and the reflecting surface may be formed on the refracting surface.

In particular, the reflecting surface (not shown) may be formed on one surface of the reflecting mirror 120 (which is disposed facing the projection unit 110) using a metal layer such as aluminum or silver, a highly reflective material layer, or a dielectric multi-layered membrane to reflect the projected image. The image projected by the projection unit 110 is reflected by the reflecting surface and displayed on the screen 10.

An area on the reflecting surface which is contacted by the image projected by the projection unit 110 may be referred to as an effective surface (not shown).

In particular, a magnification and a position of the image projected onto the screen 10 by the projection unit 110 may be adjusted by changing one or more of a degree of concavity of the reflecting surface of the reflecting mirror 120, a distance between the reflecting mirror 120 and the projection unit 110, and a degree of inclination of the projection unit 110.

The reflecting mirror 120 comprises a first fixing part, a second fixing part, and a third fixing part (not shown) fixed to the case 130.

More specifically, the first fixing part is disposed on a center axis of the reflecting mirror 120 on an outer area of the reflecting surface to fix the reflecting mirror 120 to the case 130, and the second and the third fixing parts are disposed on the outer area of the reflecting surface, forming a triangle with the first fixing part, and are configured to fix the reflecting mirror 120 to the case 130. The outer area referred to herein may be a portion protruding from an edge of the reflecting surface.

For example, the first fixing part may be disposed on an upper center portion of the outer area of the reflecting surface, and the second and the third fixing parts may be disposed on a lower left portion and a lower right portion of the outer area of the reflecting surface, respectively, forming a triangle with the first fixing part.

The first, second, and third fixing parts may form an isosceles triangle or a regular triangle, and the second and the third fixing parts may be disposed at respective points of the edge of the reflecting mirror 120 where the curvature of the reflecting surface is changed.

As another example, the first fixing part may be disposed on a lower center portion of the outer area of the reflecting surface, and the second and the third fixing parts may be disposed on an upper left portion and an upper right portion of the outer area of the reflecting surface, respectively, forming an inverted triangle with the first fixing part.

The first, second, and third fixing parts may form an inverted isosceles triangle or an inverted regular triangle, and the second fixing part may be disposed on a corner of the upper left portion of the outer area of the reflecting surface and the third fixing portion may be disposed on a corner on the upper right portion of the outer area of the reflecting surface.

Each of the first, second, and third fixing parts may include a respective hole formed on the outer area of the reflecting surface and a respective connection member penetrating through the corresponding hole and connected to the case 130. Each respective hole and each respective connection member may include a screw hole and a screw. The reflecting mirror 120 is fixed to the case 130 by means of the first, second, and third fixing parts.

The first, second, and third fixing parts will be described in detail below with reference to the drawings.

The case 130 supports the projection unit 110 and the reflecting mirror 120. To achieve this, the case 130 may comprise a protrusion (not shown) to be connected to each of the fixing parts, and may comprise one or more elastic members (not shown) disposed between the protrusion and each of the fixing parts to change an angle of the reflecting mirror 120.

More specifically, if the first, second, and third fixing parts form a triangle, the case 130 may comprise a first protrusion (not shown) connected to the second fixing part and a second protrusion (not shown) connected to the third fixing part. Each of the protrusions may have a hole to be connected with the respective connection members of the second and the third fixing parts, and the connection member of the first fixing part may be connected through a hole formed on the case 130.

The case 130 may comprise a first elastic member (not shown) disposed between the first protrusion and the second fixing part and a second elastic member disposed between the second protrusion and the third fixing part. Accordingly, a connection angle of the reflecting mirror 120 may be adjusted according to a connection state between the second fixing part and the first protrusion and a connection state between the third fixing part and the second protrusion.

If the first, second, and third fixing parts form an inverted triangle, the case 130 may comprise a first protrusion (not shown) connected to the first fixing part, a second protrusion (not shown) connected to the second fixing part, and a third protrusion (not shown) connected to the third fixing part. Each of the protrusions may have a respective hole to be respectively connected to the corresponding connection members of the first, second, and third fixing parts.

The case 130 may comprise a first elastic member (not shown) disposed between the first protrusion and the first fixing part, a second elastic member (not shown) disposed between the second protrusion and the second fixing part, and a third elastic member (not shown) disposed between the third protrusion and the third fixing part. Accordingly, the connection angle of the reflecting mirror 120 may be adjusted according to a connection state between the first fixing part and the second protrusion, a connection state between the second fixing part and the second protrusion, and a connection state between the third fixing part and the third protrusion.

In one or more of the exemplary embodiments described above, the connection state may refer to a degree of tightness of the respective connection member penetrating through the hole of the respective fixing part and the hole of the respective protrusion (or the case), and a reflection angle of the reflecting mirror 120 may be changed based on the degree of tightness of the connection member.

For example, if the first, second, and third fixing parts form a triangle, the connection members of the first fixing part and the third fixing part may be adjusted to be tighter than the connection member of the second fixing part so that the reflecting mirror 120 has an upward and rightward reflection angle. This characteristic may be applied similarly in the situation in which the first, second, and third fixing parts form an inverted triangle.

Although the projection unit 110 and the reflecting mirror 120 are fixed to the case 130 in the exemplary embodiments described above, this is merely an example. Alternatively, a separate inner case may be provided to fix a projection unit and a reflecting mirror, and a separate outer case may be provided to house the inner case.

In the exemplary embodiments described above, the first fixing part is disposed on the center axis of the reflecting mirror 120, and the second and the third fixing parts are disposed to form the triangle or the inverted triangle with the first fixing part. If the reflecting mirror 120 is fixed to the case 130 by means of the first, second, and third fixing parts being disposed as described above, thermal deformation of the reflecting mirror 120, which may be caused by an increase in internal temperature of the projector 100, can be substantially prevented.

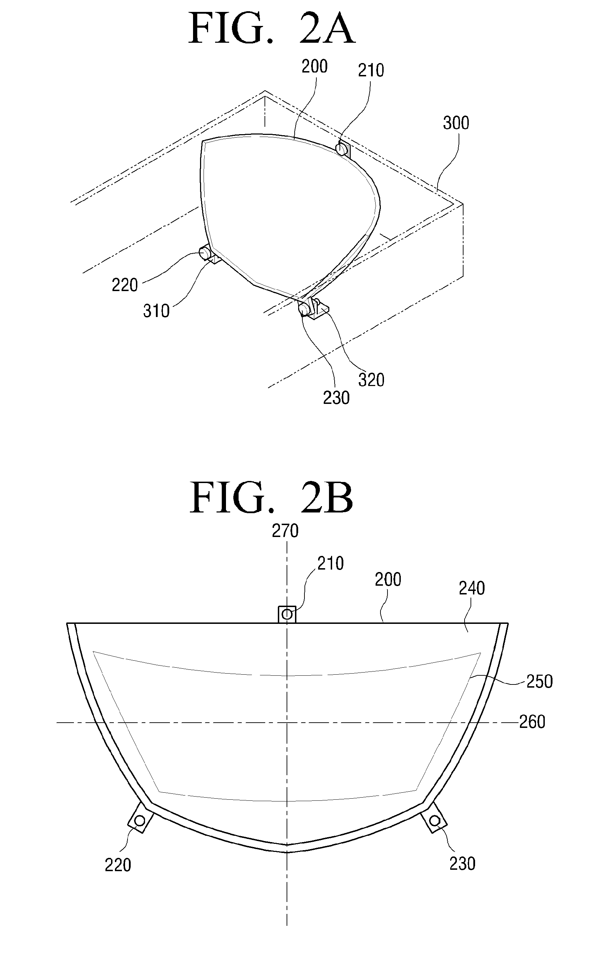

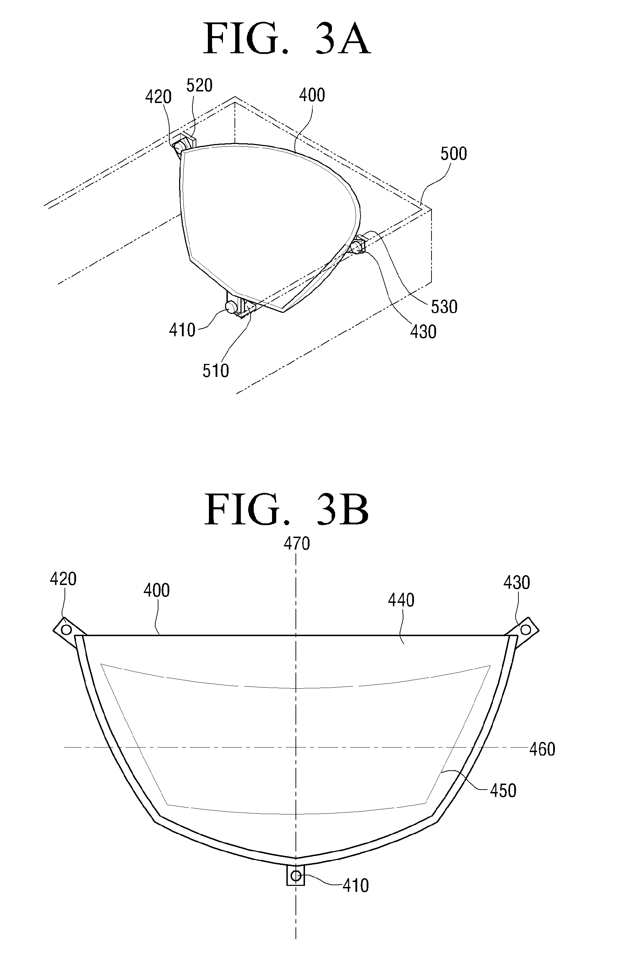

Hereinafter, positions of the first, second, and third fixing parts will be described in detail with reference to FIGS. 2A, 2B, 3A, and 3B.

FIGS. 2A and 2B are views which illustrate a method for fixing a reflecting mirror to a case according to an exemplary embodiment.

More specifically, FIG. 2A illustrates a reflecting mirror fixed to a case by using first, second, and third fixing parts disposed according to an exemplary embodiment, and FIG. 2B is a front view illustrating the reflecting mirror according to an exemplary embodiment.

Referring to FIG. 2A, a first fixing part 210 is disposed on an upper center portion of a reflecting mirror 200, and a second fixing part 220 and a third fixing part 230 are disposed on a lower left portion and a lower right portion of the reflecting mirror 200, respectively, thereby forming a triangle with the first fixing part 210.

Each of the first, second, and third fixing parts 210, 220, 230 fixes the reflecting mirror 200 to a case 300 by using a respective hole formed on a corresponding portion protruding from the reflecting mirror 200 and a respective connection member penetrating through the corresponding hole.

Each respective hole and each respective connection member penetrating through the corresponding hole may be a screen hole and a screw, respectively.

The case 300 comprises a first protrusion 310 connected to the second fixing part 220 and a second protrusion 320 connected to the third fixing part 230.

More specifically, the first protrusion 310 may comprise a hole to be connected to the respective connection member penetrating through the corresponding hole of the second fixing part 220, and the second protrusion 320 may comprise a hole to be connected to the respective connection member penetrating through the corresponding hole of the third fixing part 230. The case 300 may comprise a hole to be connected to the respective connection member penetrating through the corresponding hole of the first fixing part 210. Similarly as in the above-described example, the holes of the first and the second protrusions 310 and 320 may be screw holes.

FIG. 2B is a front view illustrating the reflecting mirror 200 according to an exemplary embodiment.

Referring to FIG. 2B, the reflecting mirror 200 comprises a reflecting surface 240 to reflect an image projected by the projection unit 110 (see FIG. 1), and the image projected by the projection unit 110 contacts the reflecting surface 240, forming an effective surface, and is reflected toward the screen 10 (see FIG. 1).

The first fixing part 210 (specifically, the hole) may be disposed on an upper center portion of an outer area of the reflecting surface 240, and the second fixing part 220 may be disposed away from the first fixing part 210 by a first predetermined distance and is disposed on a lower left portion of the outer area of the reflecting surface 240. The third fixing part 230 may be disposed away from the first fixing part 210 by a second predetermined distance (which may or may not be equal to the first predetermined distance) and may be disposed on a lower right portion of the outer area of the reflecting surface 240.

In particular, with reference to a horizontal reference axis 260 and a vertical reference axis 270 crossing each other at an approximate center of the reflecting surface 240, the first fixing part 210 may be disposed on the vertical reference axis 270 on the outer area of the reflecting surface 240, and the second fixing part 220 may be disposed to the left of the vertical reference axis 270 and below the horizontal reference axis 260 on the outer area of the reflecting surface 240. In addition, the third fixing part 230 may be disposed to the right of the vertical reference axis 270 and below the horizontal reference axis 260 on the outer area of the reflecting surface 240.

In some exemplary embodiments, a distance between the second fixing part 220 and the first fixing part 210 may be the same as a distance between the third fixing part 230 and the first fixing part 210. Accordingly, the first fixing part 210, the second fixing part 220, and the third fixing part 230 may be disposed such that they form an isosceles triangle with reference to the first fixing part 210.

In some exemplary embodiments, a distance between the second fixing part 220 and the first fixing part 210, a distance between the third fixing part 230 and the first fixing part 210, and a distance between the second fixing part 220 and the third fixing part 230 are the same. Accordingly, the first fixing part 210, the second fixing part 220, and the third fixing part 230 may be disposed such that they form a regular triangle with reference to the first fixing part 210. As described above, the first, second, and third fixing parts 210, 220, and 230 fix the reflecting mirror 200 to the case 300 by means of the respective holes formed on the outer area of the reflecting surface 240. This configuration serves a purpose to prevent influence on the image projected onto the screen 10 by the projection unit 110 (see FIG. 1).

In addition, as shown in FIG. 2B, the second fixing part 220 and the third fixing part 230 may be disposed at points of an edge of the reflecting mirror 200 where a curvature of the reflecting mirror 200 is changed. However, this should not be considered as limiting. The second fixing part 220 and the third fixing part 230 may be disposed at any points of the reflecting mirror 200 that can form a triangle with the first fixing part 210, regardless of whether the second fixing part 220 and the third fixing part 230 are disposed at points at which the curvature of the reflecting mirror 200 is changed.

Although the first fixing part 210 is directly connected to the case 300 in the exemplary embodiment described above with respect to FIGS. 2A and 2B, this is merely an example.

Alternatively, the case 300 may have a separate protrusion to be connected to the first fixing part 210.

In addition, although the first and the second protrusions 310 and 320 are disposed on a lower surface of the case 300 in the exemplary embodiment described above with respect to FIGS. 2A and 2B, this is merely an example. Alternatively, the first and the second protrusions 310 and 320 may be disposed on left and right side surfaces, respectively, or on a rear surface of the case. FIGS. 3A and 3B are views which illustrate a method for fixing a reflecting mirror to a case according to another exemplary embodiment.

More specifically, FIG. 3A illustrates a reflecting mirror fixed to a case by means of first, second, and third fixing parts disposed according to another exemplary embodiment, and FIG. 3B is a front view illustrating the reflecting mirror according to another exemplary embodiment. Referring to FIG. 3A, a first fixing part 410 may be disposed on a lower center portion of a reflecting mirror 400, and a second fixing part 420 and a third fixing part 430 may be disposed on an upper left portion and an upper right portion of the reflecting mirror 400, respectively, forming an inverted triangle with the first fixing part 410.

Each of the first, second, and third fixing parts 410, 420, 430 may fix the reflecting mirror 400 to a case 500 by using a respective hole and a respective connection member penetrating through the corresponding hole.

Each respective hole and each respective connection member penetrating through the corresponding hole may be a screw hole and a screw, respectively.

The case 500 comprises a first protrusion 510 connected to the first fixing part 410, a second protrusion 520 connected to the second fixing part 420, and a third protrusion 530 connected to the third fixing part 430.

More specifically, the first protrusion 510 may comprise a hole to be connected to the respective connection member penetrating through the corresponding hole of the first fixing part 410, and the second protrusion 520 may comprise a hole to be connected to the respective connection member penetrating through the corresponding hole of the second fixing part 420. In addition, the third protrusion 530 may comprise a hole to be connected to the respective connection member penetrating through the corresponding hole of the third fixing part 430. Similarly as in the above-described example, the respective holes of each of the first, second, and third protrusion 510, 520, and 530 may be screw holes.

FIG. 3B is a front view illustrating the reflecting mirror 400 according to another exemplary embodiment.

Referring to FIG. 3B, the reflecting mirror 400 comprises a reflecting surface 440 to reflect an image projected by the projection unit 100 (see FIG. 1), and the image projected by the projection unit 110 contacts the reflecting surface 440, forming an effective surface 450, and is reflected toward the screen 10 (see FIG. 1).

The first fixing part 410 (specifically, the hole) may be disposed on a lower center portion of an outer area of the reflecting surface 440, and the second fixing part 420 may be disposed away from the first fixing part 410 by a first predetermined distance and may be disposed on an upper left portion of the outer area of the reflecting surface 440. In addition, the third fixing part 430 may be disposed away from the first fixing part 410 by a second predetermined distance (which may or may not be equal to the first predetermined distance) and may be disposed on an upper right portion of the outer area of the reflecting surface 440.

In particular, with reference to a horizontal reference axis 460 and a vertical reference axis 470 crossing each other at an approximate center of the reflecting surface 440, the first fixing part 410 may be disposed on the vertical reference axis 470 on the outer area of the reflecting surface 440, and the second fixing part 420 may be disposed to the left of the vertical reference axis 470 and above the horizontal reference axis 460 on the outer area of the reflecting surface 440. The third fixing part 430 may be disposed to the right of the vertical reference axis 470 and above the horizontal reference axis 460 on the outer area of the reflecting surface 440.

In some exemplary embodiments, a distance between the second fixing part 420 and the first fixing part 410 may be the same as a distance between the third fixing part 430 and the first fixing part 410. Accordingly, the first fixing part 410, the second fixing part 420, and the third fixing part 430 may be disposed such that they form an inverted isosceles triangle with reference to the first fixing part 410.

In some exemplary embodiments, a distance between the second fixing part 420 and the first fixing part 410, a distance between the third fixing part 430 and the first fixing part 410, and a distance between the second fixing part 420 and the third fixing part 430 may be the same. Accordingly, the first fixing part 410, the second fixing part 420, and the third fixing part 430 may be disposed such that they form an inverted regular triangle with reference to the first fixing part 410.

As described above, the first, second, and third fixing parts 410, 420, 430 fix the reflecting mirror 400 to the case 500 by means of the respective holes formed on the outer area of the reflecting surface 440. This configuration serves a purpose to prevent influence on the image projected onto the screen 10 by the projection unit 110 (see FIG. 1).

Also, as shown in FIG. 3B, the second fixing part 420 may be formed on a corner of the upper left portion on the outer area of the reflecting surface 440, and the third fixing part 430 may be formed on a corner of the upper right portion on the outer area of the reflecting surface 440. In particular, if imaginary lines are drawn from the first fixing part 410 to the upper left portion and the upper right portion of the reflecting mirror 400, the positions of the second fixing part 420 and the third fixing part 430 may be determined so that each of the respective centers of the holes of the second fixing part 420 and the third fixing part 430 contacts the corresponding imaginary line.

However, this is merely an example. Even if the second fixing part 420 and the third fixing part 430 are not respectively disposed on the respective corners of the upper left portion and the upper right portion, the second fixing part 420 and the third fixing part 430 may be disposed to form the inverted triangle with the first fixing part 410.

Although the first, second, and third protrusions 510, 520, 530 are respectively formed on the lower surface and the left and the right side surfaces of the case 500 in the exemplary embodiment described above with respect to FIGS. 3A and 3B, this is merely an example. Alternatively, the first, second, and third protrusions 510, 520, 530 may be formed on a rear surface of the case.

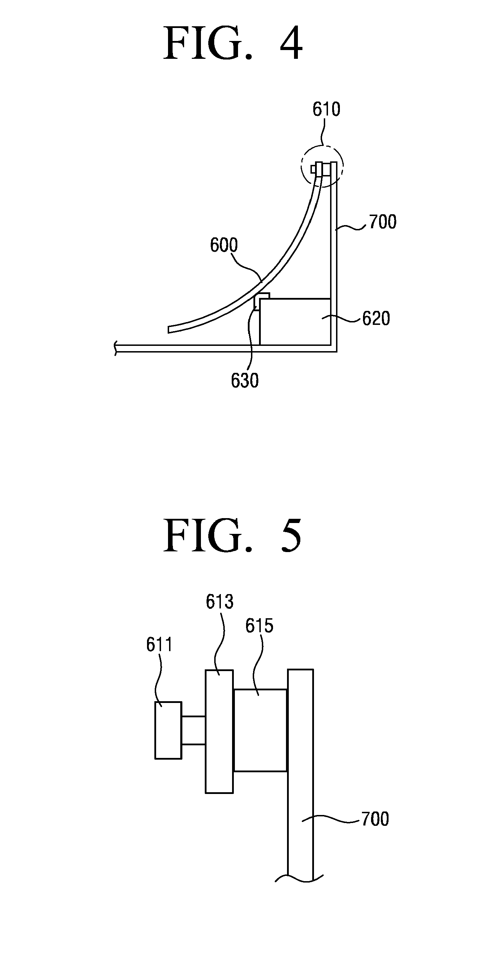

FIG. 4 is a cross sectional view illustrating a reflecting mirror and a case according to an exemplary embodiment. In particular, FIG. 4 illustrates a cross sectional view of a reflecting mirror 600 and a case 700 taken along a center axis, wherein a first fixing part 610 is disposed on an upper center portion of the reflecting mirror 600. Accordingly, a second fixing part and a third fixing part are omitted.

As shown in FIG. 4, a rear surface of the reflecting mirror 600 may be positioned at a distance away from the case 700. In particular, the reflecting mirror 600 may be connected to the case 700 by means of first, second, and third fixing parts so that the reflecting mirror 600 is positioned at a predetermined distance away from the case 700.

The case 700 may include a supporting part 620 disposed in a space between the rear surface of the reflecting mirror 600 and the case 700 to support the reflecting mirror 600, and a buffering part 630 disposed on the supporting part 620 in contact with the reflecting mirror 600. The buffering part 630 may be made of rubber or sponge, for example, or any other material having elasticity.

In accordance with the exemplary embodiments described above, thermal deformation which may be caused by an increase in internal temperature of the projector can be substantially minimized by means of the first, second, and third fixing parts disposed to form the triangle or the inverted triangle.

Also, since the supporting part 620 supports the reflecting mirror 600 through the buffering part 630, the supporting part 620 is prevented from acting as a force point with respect to the reflecting mirror 600, even if thermal deformation occurs in the reflecting mirror 600.

Although the fixing part 610 is disposed on the upper center portion of the reflecting mirror 600 in the exemplary embodiment described above with reference to FIG. 4, this is merely an example. Alternatively, if the first fixing part 610 is disposed on a lower center portion of the reflecting mirror 600, the bottom surface of the reflecting mirror 600 may be positioned at a distance away from the case 700, and the supporting part 620 may be provided between the bottom surface of the reflecting mirror 600 and the case 700.

Also, although the supporting part 620 is provided to support the reflecting mirror 600 in the exemplary embodiment described above with respect to FIG. 4, this is merely an example. Alternatively, the reflecting mirror 600 may be positioned at a distance away from the case 700 by means of the first, second, and third fixing parts without requiring a separate supporting part. In this example, the space between the bottom surface of the reflecting mirror 600 and the case 700 may be empty.

FIG. 5 is a view which illustrates a fixing part in detail according to an exemplary embodiment. In particular, FIG. 5 illustrates a fixing part for use in conjunction with the exemplary embodiment described above with respect to FIG. 4.

As shown in FIG. 5, a connection member 611 of the fixing part 610 penetrates through a hole formed on an outer area 613 of the reflecting mirror 600 and a hole formed on the case 700, thereby fixing the reflecting mirror 600 to the case 700.

Also, an elastic member 615 may be disposed between the area on which the hole is formed and the case 700. The elastic member may be made of a material having elasticity, such as, for example, a spring.

Although FIG. 5 illustrates the fixing part as being disposed on the upper center portion of the reflecting mirror 600, other fixing parts connected to protrusions of the case 700 may have the same configuration. In particular, each of the fixing parts connected to the corresponding protrusions may comprise a respective elastic member disposed between the respective protrusion and the corresponding fixing part.

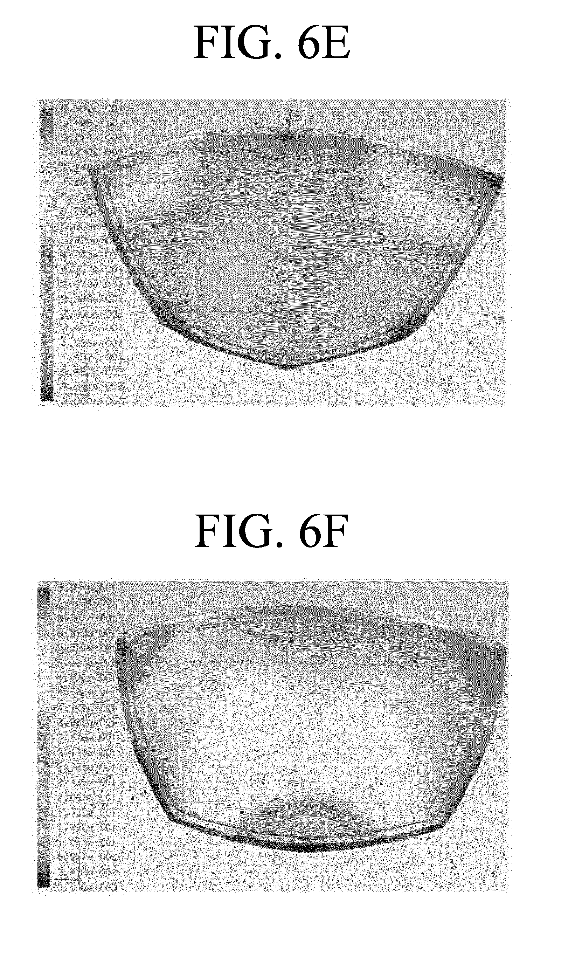

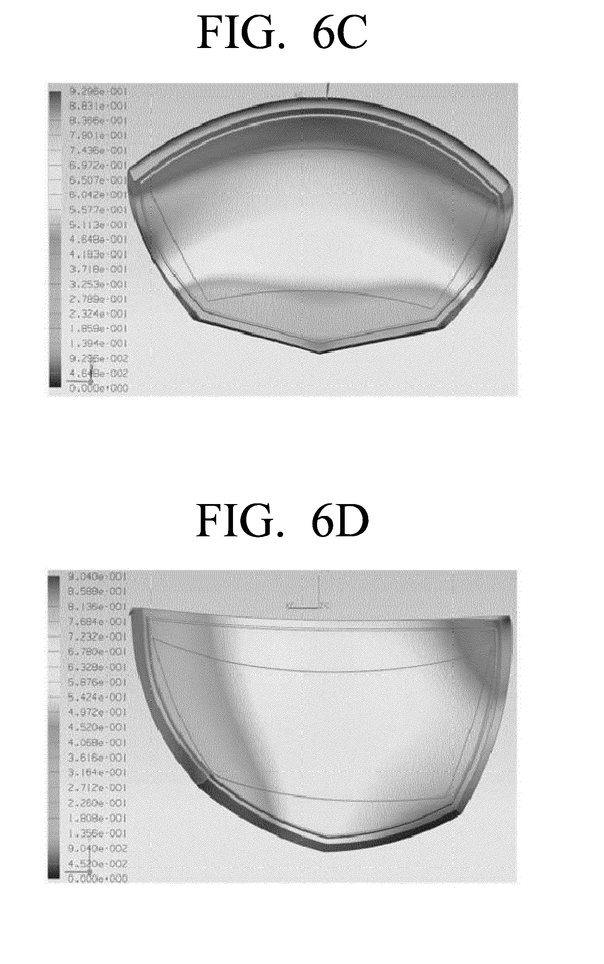

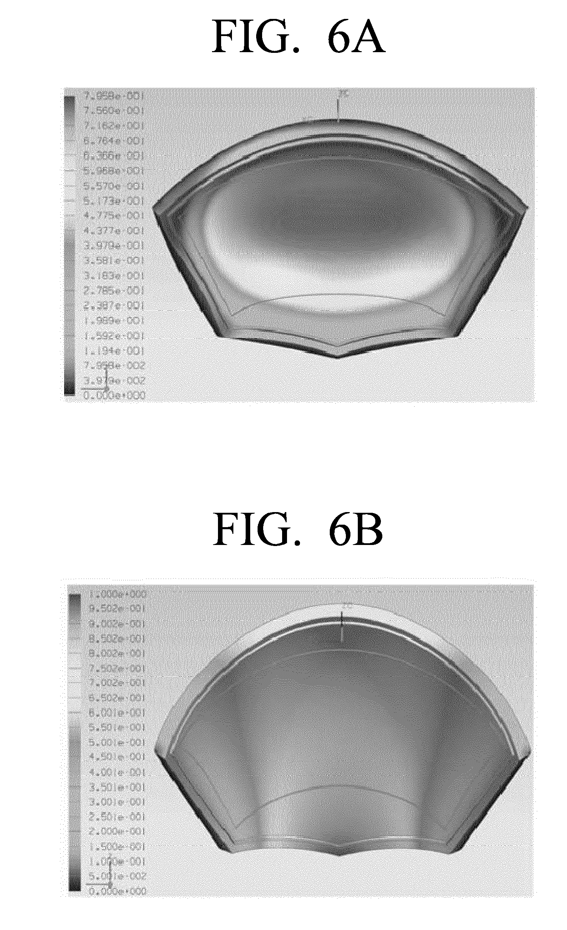

FIGS. 6A, 6B, 6C, 6D, 6E, and 6F are views which illustrate thermal deformation modes according to various fixing positions of the reflecting mirror.

More specifically, FIGS. 6A, 6B, 6C, 6D, 6E, and 6F illustrate thermal deformation modes according to thermal distribution of heat absorbed by radiant energy of light remaining after being reflected from the reflecting mirror and an internal environment condition of the projector. The thermal deformation described herein may refer, for example, to a degree of bending or a degree of inclination of the reflecting mirror.

If the reflecting mirror is fixed in the fixing positions as described above with respect to the various exemplary embodiments, as shown in FIGS. 6E and 6F, the thermal deformation is substantially minimized, particularly by comparison with a situation in which the reflecting mirror is fixed in various alternative fixing positions as shown in FIGS. 6A, 6B, 6C, and 6D. The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A projector comprising:
a projection unit which projects an image;
a case which supports the projection unit;
a reflecting mirror which comprises a reflecting surface that faces the projection unit and has a curvature, and reflects light;
a first fixing part which is disposed on a center axis of the reflecting mirror on an outer area of the reflecting surface and which fixes the reflecting mirror to the case; and
a second fixing part and a third fixing part which are disposed on the outer area of the reflecting surface, forming a triangle with the first fixing part, and which fix the reflecting mirror to the case.

2. The projector as claimed in claim 1, wherein the reflecting mirror is an aspheric mirror having a concave refracting surface, and the reflecting surface is formed on the refracting surface.

3. The projector as claimed in claim 2, wherein the first fixing part is disposed on an upper center portion of the outer area of the reflecting surface of the reflecting mirror, and the second and the third fixing parts are disposed on a lower left portion and a lower right portion of the outer area of the reflecting surface, respectively, forming a triangle with the first fixing part.

4. The projector as claimed in claim 3, wherein the second and the third fixing parts are respectively disposed at respective points of an edge of the reflecting mirror where the curvature is changed.

5. The projector as claimed in claim 3 or 4, wherein the case comprises:
a first protrusion which is connected to the second fixing part; and
a second protrusion which is connected to the third fixing part.

6. The projector as claimed in claim 5, wherein the case further comprises:
a first elastic member which is disposed between the first protrusion and the second fixing part; and
a second elastic member which is disposed between the second protrusion and the third fixing part,
wherein a connection angle of the reflecting mirror is adjusted according to a connection state between the second fixing part and the first protrusion and a connection state between the third fixing part and the second protrusion.

7. The projector as claimed in any one of claims 2 to 6, wherein the first fixing part is disposed on a lower center portion of the outer area of the reflecting surface of the reflecting mirror, and
wherein the second and the third fixing parts are disposed on upper left portion and an upper right portion of the outer area of the reflecting surface, respectively, forming an inverted triangle with the first fixing part.

8. The projector as claimed in claim 7, wherein the second fixing part is disposed on a corner of the upper left portion of the outer area of the reflecting surface, and
wherein the third fixing part is disposed on a corner of the upper right portion of the outer area of the reflecting surface.

9. The projector as claimed in claim 7 or 8, wherein the case comprises:
a first protrusion which is connected to the first fixing part;
a second protrusion which is connected to the second fixing part; and
a third protrusion which is connected to the third fixing part.

10. The projector as claimed in claim 9, wherein the case further comprises:
a first elastic member which is disposed between the first protrusion and the first fixing part;
a second elastic member which is disposed between the second protrusion and the second fixing part; and
a third elastic member which is disposed between the third protrusion and the third fixing part,
wherein a connection angle of the reflecting mirror is adjusted according to a connection state between the first fixing part and the first protrusion, a connection state between the second fixing part and the second protrusion, and a connection state between the third fixing part and the third protrusion.

11. The projector as claimed in any one of claims 1 to 10, wherein each of the first, second, and third fixing parts comprises a respective hole formed on the outer area of the reflecting surface and a respective connection member penetrating through the corresponding hole and connected to the case.

12. The projector as claimed in any one of claims 1 to 11, wherein a bottom surface of the reflecting mirror is positioned at a predetermined distance away from the case.

13. The projector as claimed in claim 12, further comprising:
a supporting part which is disposed in a space between the bottom surface of the reflecting mirror and the case to support the reflecting mirror; and
a buffering part which is disposed on the supporting part in contact with the reflecting mirror.

14. A method for reducing a thermal deformation effect upon a reflecting mirror used for reflecting an image onto a screen, the image being projected by a projection unit supported by a case, and the method comprising:
arranging a first fixing part on a center vertical axis of the reflecting mirror;
arranging a second fixing part on a first outer portion of the reflecting mirror;
arranging a third fixing part on a second outer portion of the reflecting mirror such that the first, second, and third fixing parts form a triangle; and
using each of the first, second, and third fixing parts to secure the reflecting mirror to the case.

15. The method of claim 14, further comprising arranging each of the second fixing part and the third fixing part at a same predetermined distance away from the first fixing part such that the first, second, and third fixing parts form an isosceles triangle.
